# EUROPEAN PATENT SPECIFICATION

(11) **EP 0 400 074 B1**
(45) Date of publication and mention of the grant of the patent: **28.09.1994**
(21) Application number: 89903349.2
(22) Date of filing: 03.03.1989
(51) Int. Cl.: G01L 9/00, H01G 7/00

(54) **PROTECTED PRESSURE SENSOR**
GESCHÜTZTER DRUCKSENSOR
CAPTEUR DE PRESSION PROTEGE

(30) Priority: 03.03.1988 US 163598
(43) Date of publication of application: 05.12.1990
(73) Proprietor: THE FOXBORO COMPANY, Foxboro, MA 02035 (US)
(72) Inventor: KOEN, Edward, F., Pleasanton, CA 94566 (US); TASKER, Richard, San Jose, CA 95125 (US)
(74) Representative: Cooke, William Douglas
(86) International application number: US8900823
(87) International publication number: WO8908244

(56) References cited:
- JP-A- 5 225 680
- US-A- 4 567 006
- US-A- 4 655 088
- US-A- 4 686 764
- US-A- 4 691 573
- US-A- 4 732 042
- US H H 606

## Description

This invention relates generally to solid state pressure sensors and more particularly, to means and methods for protecting a pressure sensor element from the process media whose pressure is being sensed.

Solid state pressure sensors are being employed in a variety of new applications because of their small size and compatibility with other electronic systems. Semiconductor chips or dice are frequently used as the pressure sensing elements. However, such semiconductor sensing elements are particularly sensitive to contamination. Thus, if the surface of the semiconductor sensing element is exposed directly to the process media whose pressure is being measured, the semiconductor sensing element may be adversely affected. The gel generally must remain insulative; contamination may render it conductive.

A number of different approaches have been used in the prior art in order to isolate the semiconductor sensing element from the process media being measured. Among these are, for example, the use of die coats and the use of metal diaphragms coupled to the semiconductor sensing element by rigid bars or levers. None of these approaches has proven entirely satisfactory. Accordingly, a need continues to exist for improved means and methods for protecting semiconductor pressure sensing elements from the process media whose pressure is being measured.

Another method includes providing a gel-like pressure transfer medium between the pressure sensing element and a prefabricated fluorosilicone diaphragm, such as is disclosed in US Patent 4686764.

The ′764 method cannot provide highly reliable production of diaphragms which are flush with the face surface of the sensor body. The ′764 does not provide reliable initial pressurization sensitivity in sensors. The ′764 method provides sensors the sensitivity of which may vary over time. The ′764 method is time consuming and costly to make, and unreliable compared wth the present invention. In contrast, the present invention is also economical, easy to manufacture, and lends itself to automated manufacture.

According to the present invention, a method of forming a pressure sensor environmetally protected by a diaphragm comprises providing a body having in a first face thereof a cavity, wherein said cavity has a first interior surface for receiving a pressure sensor element and a second generally upward facing surface for supporting the diaphragm; mounting said pressure sensor element on said first surface; filling at least part of said cavity around said pressure sensor element with a volume of a pressure transfer material, said volume being less than the volume of said cavity extending below said body face and excluding the volume of said sensor element; characterised by pouring a volume of a flexible, pourable-in-place diaphragm material above said pressure transfer material sufficient to seal said cavity, wherein said diaphragm material and said pressure transfer material are chemically incompatible.

A significant manufacturing, quality, and performance advantage inheres in the method of fabrication, in that before the pressure transfer medium and the diaphragm are added to the sensor, the mounted sensor element or die may be tested and laser trimmed to the desired calibration. The initial flowable state of the pressure transfer medium and the diaphragm material allows the diaphragm to be applied in a zero stress state without inducing any force on the sensor. Significantly higher yields of tighter specification products result at lower cost.

Another advantage of the present invention is the ability of the pour-in-place diaphragm procedure to smoothly cover irregularities in the pressure transfer medium without creating air bubbles or pockets which could adversely affect performance.

Other advantages of the invention include: small size, sensors having compliant diaphragms which have a low spring rate; manufacturing ease; resistance to a broad spectrum of process media; low cost; enables sensing pressure applied by solid and/or semi-solid contact not just gas or liquid; and the product design lends itself to inert plastic packaging.

According to another aspect of the invention a pressure sensor comprises:
(a) a body having in a first face surface thereof a first recess of given cross-section, bottomed peripherally by means for supporting a diaphragm comprising a first upward facing surface, and a second recess displaced from said first recess, said second recess being of smaller cross-section than said first recess and being substantially bottomed by a second upward facing surface for supporting a pressure sensor element, wherein said first recess and said second recess form a unitary stepped cavity in said body face surface;
(b) signal communicating electrical pathways into said cavity;
(c) a pressure sensor element connected to the communicating pathways, the sensor being characterised by:
(d) a non-hardening flexible diaphragm poured in place; and
(e) means for i) isolating said sensor element from the pressure to be measured, ii) for transferring said pressure to said sensor element, and iii) for supporting said diaphragm, comprising a non-hardening pressure transfer medium,

wherein the pressure transfer medium and the diaphragm material are both unbonded and chemically incompatible, and said pressure transfer medium and said diaphragm material are capable of transferring said pressure to be measured to said sensor element.

The details of the present invention will be more completely understood in terms of the drawings and description which follow.

### Brief Description of the Drawings

FIG. 1 shows in simplified schematic form a plan view of a solid state semiconductor pressure sensor according to the present invention;
FIG. 2 shows in simplified schematic form a cross-section through a semiconductor solid state pressure sensor employing a preformed metallic diaphragm, according to other prior art;
FIG. 3 shows a cross section in simplified schematic form the prior art pressure sensor of US Patent 4,686,764 employing a preformed fluorosilicone diaphragm; and
FIG. 4 shows in simplified form a cross-section of portions of a solid-state pressure sensor according to the present invention.

### Detailed Description of the Drawings

For purposes of explanation, the sensor assemblies and structures described herein are illustrated for a semiconductor solid state sensing element and more particularly, solid state sensing elements having a region for sensing a measurand to be measured on a first surface thereof. Certain sensor devices may also require a region for sensing a reference measurand on a second surface, which may be opposite the first surface. However, those of skill in the art will understand that other sensor configurations may equally well be used. The measurands may be selected from the known measurands; the present example being directed to a pressure or force measurand.

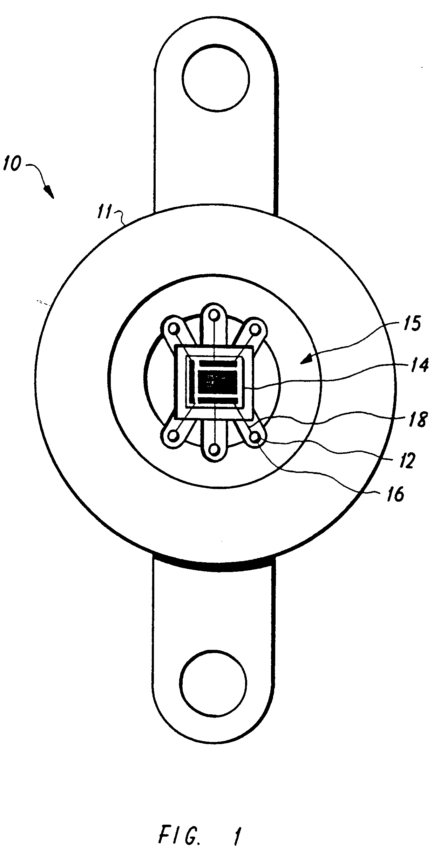

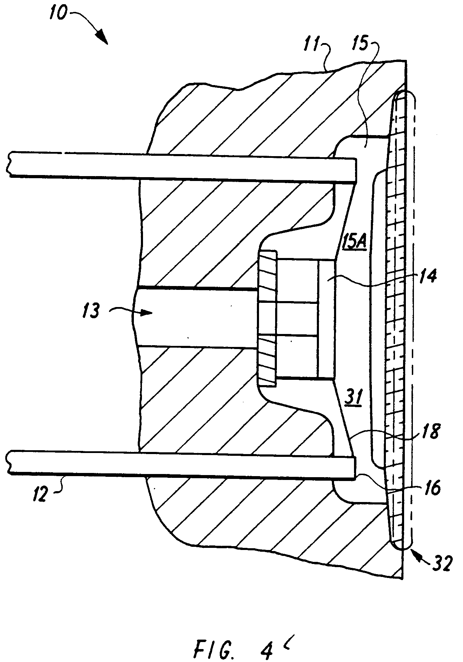

FIG. 1 shows in simplified schematic form a solid state pressure sensor. FIG. 4 shows a cross-section of the sensor of FIG. 1 In FIG. 1 and 4, pressure sensor 10 comprises header or body 11 having internal cavity 15 in which is mounted semiconductor solid state sensing element 14, which may be a chip or die. Electrical leads 12 extend from outside of body 11 through the wall of body 11 into cavity 15. Signal communication by non-electrical, e.g., optical, means may also be provided. Sensing element 14 is mounted inside cavity 15 of body 11 by known means above aperture or hole 13. This mounting means may include, for example, an adhesive. A reference pressure receiving portion of sensing element 14 is aligned over aperture 13. Areas on sensing element 14 are electrically connected by conductors 18 to leads 12, typically by wirebonds 16. Body 11 may be conveniently formed of separate parts or from a single unit. Body 11 is conveniently a dielectric material, preferably plastic, for example, polyphenylene (Noryl), or polyphenylene sulfide (e.g., Ryton R-4). Other materials may be used provided leads 12 are insulated from each other and, preferably, from body 11, and are suitably sealed.

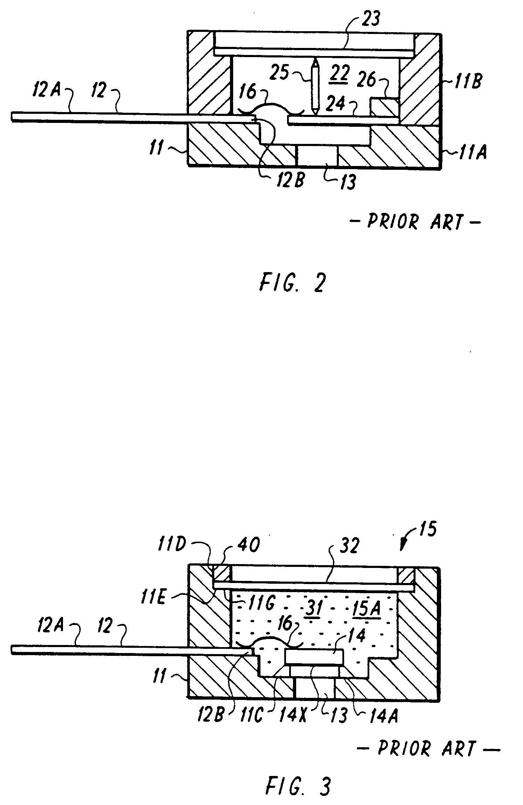

A method which is allegedly an improvement and which has been used in the prior art is illustrated in FIG. 2. FIG. 2 is a cross-section through a solid state pressure sensing element comprising a body 11 having upper and lower parts 11a and 11b, leads 12 having external portions 12a and internal portions 12b, and a bar shaped semiconductor sensing element 24 which is attached at one end to body 11 by clamp means 26 and connected to leads 12 via wirebonds 16. A prefabricated metal diaphragm 23 separates cavity 22 containing sensing element 24 from the external process media having a pressure measurand to be measured. Hole 13 allows a reference pressure to be communicated to cavity 22 when such is desired. Rigid bar or rod 25 provides mechanical coupling between the center of a Prefabricated metal diaphragm 23 and semiconductor sensing element 24.

While the configuration of FIG. 2 protects sensing element 24 from the process media whose pressure is intended to be measured, the arrangement of FIG. 2 is expensive to manufacture because of the small piece parts which must be individually handled and precisely located within body 11, and it is also comparatively fragile. It is well known, for example, that semiconductor pressure sensing elements may be extremely brittle. In order to have high sensitivity in the arrangement of FIG. 2, cantilever bar shaped element 24 must be directly coupled via rod 25 to diaphragm 23. Over-pressure conditions applied to diaphragm 23 can readily cause catastrophic failure of sensing element 24. A further disadvantage of the structure of FIG. 2 is that the sensitivity and calibration of the sensor depend critically upon the placement of bar 25 on sensing element 24 and diaphragm 23. A further problem with the arrangement of FIG. 2 is that the active regions of sensing element 24 are exposed to the reference ambient entering via hole 13.

As shown in FIG. 3, the prior art solid state sensor according to US 4,686,764 comprises body 11 having leads 12 with external portions 12a and internal portions 12b. Semiconductor sensing element 14 having reference pressure receiving region 14x is mounted by means 14a on surface llc in cavity 15 of body 11 over hole 13. Wirebonds 16 are used for coupling the active regions of sensor 14 to leads 12. The upper surface of sensor element 14 may be covered with conventional die coat (not shown). However, this is not essential and the die coat may be omitted. Body 11 conveniently extends to the open end of cavity 15 containing sensing element 14. Sensing element 14 may be sealed to surface 11c by any convenient means 14a well known in the art. Organic adhesives are a suitable sealing means. The reference pressure entering via hole 13 acts only on portion 14x of sensor 14 and does not enter cavity 15.

Once die 14 has been mounted in cavity 15 of body 11, ′764 teaches that the lower portion 15a of cavity 15 is to be filled with pressure transfer medium 31. An example of a suitable material is given in the reference as Visilox type 191 silastic manufactured by the Visilox Company of Troy, NY. In order to make the transfer medium material opaque to light, approximately 40 percent by volume of titanium dioxide may be mixed into the Visilox 191 material prior to its being introduced into cavity 15, but this is not essential when the preformed diaphragm is opaque. It is stated to be important that upper surface of material 31 extends at least above lip 11e.

After being placed into portion 15a of cavity 15, the Visilox 191 material is to be vacuum cured.

It is necessary to cover pressure transfer medium 31 with a Prefabricated protective membrane 32 (FIG. 3). Membrane 32 must be flexible and substantially impermeable to the process media of interest even after curing.

It is stated to be important that membrane or diaphragm 32 be applied to pressure transfer material 31 in such a way that substantially no air pockets or other voids are trapped within medium 31. This is very difficult to accomplish. If significant voids or pockets are present, the sensitivity and linearity of the pressure transducer will be adversely affected. Substantially void-free application of membrane 32 may allegedly be accomplished as illustrated in FIG. 3, in which a first portion of membrane 32 is placed in contact with a portion of shelf or lip 11e where the transfer medium meets shelf 11e. Prefabricated membrane 32 is then rolled across opening 15 away from the starting location to enclose the cavity 15. It is stated that in the process of rolling out diaphragm 32 it is necessary to push ahead of the unrolling diaphragm a "bow-wave" of material 31 which allegedly fills in any exposed empty places or voids within cavity portion 15.

The rolling and squeezing motion of diaphragm 32 is to be continued until all the voids are filled by material 31, with excess material to be removed. In practice, this is difficult to achieve reliably. The reference teaches that membrane 32 may be of any convenient flexible impermeable material. Fluorosilicone is cited as an example of a suitable material for membrane 32.

The prior art disadvantages may be overcome by the means and method of the present invention which are illustrated in FIG. 4, which shows a simplified schematic cross-sectional view of a solid state measurand sensor, similar to FIG. 3, but made according to the present invention.

As shown in FIG. 4, solid state sensor 10 comprises body 11 having leads 12 with portions external to the body 11 and other portions extending into the cavity 15 of the body 11. Semiconductor sensing element 14 having a reference pressure receiving region is mounted by known means on an exposed surface in cavity 15 of body 11 over hole 13. Wires 18 are used for coupling the active regions of sensor 14 to leads 12 where they are conventionally bonded. The upper surface of sensor element 14 may be covered with conventional die coat (not shown). However, this is not essential and the die coat may be omitted. Body 11 conveniently extends to the open end of cavity 15 containing sensing element 14. Sensing element 14 may be sealed to the exposed surface by any convenient means known in the art, including organic adhesives. The reference pressure entering via aperture 13 acts only on a portion of sensor 14 and does not enter cavity 15.

Once die 14 has been mounted in cavity 15 of body 11, then lower portion 15a of cavity 15 is at least partially filled with a pressure transfer medium 31. It is important that during filling of lower portion 15a of cavity 15 with material 31 that trapped gas pockets or enclosed voids be avoided as much as possible. This is conveniently accomplished by using a material for pressure transfer medium 31 which has a low viscosity at the time of introduction. It need not fully cure. A measured amount of material 31 is deposited on and/or around die 14 within the header or body 11 cavity 15 to flow into and fill lower portion 15a of cavity 15. It is important that upper surface of material 31 extend at least above the die 14.

Medium 31 may be of any convenient material which does not contaminate sensor element 14, which remains in a liquid or at least gel-like or elastic form after introduction and curing of subsequent layers. If a material is used which sets up or becomes hard, then the measurand signal which will subsequently be applied to diaphragm 32 will be attenuated or skewed with temperature excursions before reaching sensor element 14 and the finished device 10 will be insensitive or inaccurate. The gel may be evacuated to reduce voids.

More elastic materials, even liquids, can also be used. If the material 31 is at least partially cured after being introduced into cavity 15, then the needed elasticities apply after curing. An example of a suitable material is fluorosilicone dielectric gel, such as Dow-Corning part number X3-6679.

These materials are initially in a liquid or semi-liquid state and upon curing set up to the consistency of a very soft rubber-like material or gel.

It may be desirable that radiant (light) energy should be excluded from reaching the sensor element. If it is desired to test, laser trim, and/or calibrate the sensor element, such procedures should be completed before covering the sensor die. An opaque diaphragm material may be used as a light blocker, or the transfer medium may be opaque. In order to make the transfer medium material opaque to light, a portion of titanium dioxide or equivalent may be mixed into the pressure transfer material prior to its being introduced into cavity 15, but this is not essential when the diaphragm is opaque. After being placed into portion 15a of cavity 15, the material 31 may be cured following the manufacturer's recommendations. Those of skill in the art will know the appropriate materials curing cycles.

Some materials may shrink slightly on curing. Another method is to provide an initial fill of material 31 approximately to the level of cure the initial fill, as described above, and then prior to pouring membrane 32, a small amount of the material 31 or other liquid is added to bring the level back up to or slightly above the desired level for material 31.

The presence of poured-in-place membrane 32 has been found to be useful in preventing undesirable external materials from reaching sensor element 14.

According to the present invention, it is desired to cover pressure transfer medium 31 with pour-in-place membrane 32 such as is shown in FIG. 4. The pressure transfer material provides support for the diaphragm. Pourable membrane 32 must be flexible and substantially impermeable to the process media of interest, even after curing. The substitution of a poured-in-place diaphragm for a prefabricated diaphragm is an important variation from the prior art processes for making sensors.

It is preferred that membrane or diaphragm 32 be deposited on the transfer material 31 in such a way that substantially no air pockets or other voids are trapped within medium 31. With significant voids or pockets present, the sensitivity and linearity of the pressure transducer will be adversely affected. Substantially void-free application of membrane 32 may be conveniently accomplished by the method illustrated in FIG. 4, in which a pourable, viscous membrane 32 material is poured in contact with the transfer medium, filling in any exposed empty places or voids within cavity portion 15a, e.g., such as are illustrated at location 15v in FIG. 4. Evacuating may be used to ensure voids are eliminated. Different viscosity materials may eliminate void reducing steps. Note that it may be desirable for formed-in-place membrane 32 to extend above the face surface of the header in some applications, may be level in others, or may be insufficient to extend beyond the header surface in others. These variations are difficult or impossible with the prior art methods.

Materials such as Dow-Corning X3-6679 alone, while having desirable properties as a pressure transfer medium, are sufficiently permeable to many process media so as to provide insufficient protection. Incomplete curing may leave a portion of the material in a liquid state. The membrane 32 solves these problems. Membrane 32 may be of any suitable and convenient flexible impermeable material which is conveniently pourable. Fluorosilicone is an example of a suitable material for membrane 32. Medical grade RTV type materials permit contact with bodily fluids in medical applications. It is important that membrane 32 be flexible after curing since if it is stiff, the pressure signal will be attenuated prior to reaching sensor element 14. Curing should be complete and not continue after manufacture and installation. Thicknesses for membrane 32 in the range 0.001 to 0.10 (25»m to 2.5mm) may be useful, 0.01 to 0.10 inches (0.25-2.5mm) are more useful, with 0.02 to 0.05 inches (0.5-1.2mm) being preferred.

Pressure sensors according to the present invention were constructed wherein body 11 was circular and in which the initial aperture for cavity 15 had a minor diameter of approximately 0.22 inches (5.6mm), and the chip or die 14 had a mounting area diameter of approximately 0.15 inches (3.8mm). A fluorosilicone diaphragm having an outer diameter corresponding approximately to the size of the body face opening (i.e., the cavity major diameter) was poured in place over pressure transfer medium 31 as described above. In one case the major diameter was about 0.48 inches (12mm). It was determined that the sensitivity of the resulting unit was substantially the same with and without membrane 32. There was no hysteresis. The fluorosilicone used was X3-6679 type material manufactured by Down-Corning of Midland, Michigan. This fluorosilicone material is particularly soft and flexible. If a harder or denser membrane material is desired to be used, then the thickness of the membrane should be correspondingly reduced in order to maintain about the same sensitivity. It is desirable that the thickness of different membrane materials be adjusted approximately inversely proportional to their relative hardness; this being dependent on the intended application and being within the skill of one of ordinary skill within the art.

It will be appreciated by those of ordinary skill in the art, that different membrane materials which are particularly impermeable to certain ambients may be used to cover sensors intended for such ambients.

It will also be appreciated by those of skill in the art, that the above-described structure and method of fabrication provide a particularly conveniently manufactured membrane protected pressure sensor. No complex mechanical linkages, as were used for example in the structure of FIG. 2 are required. No complicated, difficult "rolling-in-place" diaphragm positioning and/or attaching procedures are required. The finished device as illustrated in FIG. 4 is particularly rugged, is flat, and uses a minimum number of piece parts. Further, no complex physical assembly steps are required for coupling the membrane to the sensing element. The product according to the present invention lends itself to automated assembly and manufacture. Additionally, the device is not readily damaged by over-pressure conditions since the active portion of the solid state sensor element is uniformly supported by attachment means surrounding hole 13.

The pressure transfer medium (gel) and the poured-in-place diaphragm are of dissimilar materials, preferably both chemically inert and/or mutually incompatible. For example, use of a dimethyl silicone gel is preferred with a fluorosilicone diaphragm, and a fluorosilicone gel is preferred with a dimethyl silicone diaphragm material. Dimethyl silicone gels in combination with dimethyl silicone diaphragms (and fluorosilicone/fluorosilicone) should be avoided, absent some means to prevent chemical interaction between the gel and diaphragm. Skilled artisans in this field will recognize that each diaphragm material has beneficial uses.

Those of skill in the art will understand that a variety of different sensing elements may be used in connection with the means and methods of the present invention, and further that a wide variety of pressure transfer materials may be employed provided they are sufficiently liquid to be applied substantially void-free in filling cavity portion 15a, and sufficiently elastic after introduction (and curing) to transmit the pressure applied to membrane 32 to sensor 14 without significant attenuation or hysteresis. Those of skill in the art will also understand that a variety of membrane materials may be used provided they are substantially impermeable to the ambient or process media whose pressures are intended to be measured and sufficiently flexible to be applied by the methods described herein and to avoid attenuation of the pressure signal. Accordingly, the appended claims are intended to include all such reasonable variations in materials.

## Claims

1. A method of forming a pressure sensor environmentally protected by a diaphragm, comprising: providing a body (11) having in a first face thereof a cavity (15), wherein said cavity has a first interior surface for receiving a pressure sensor element (14) and a second generally upward facing surface for supporting the diaphragm (32); mounting said pressure sensor element (14) on said first surface; filling at least part of said cavity around said pressure sensor element with a volume of a pressure transfer material (31), said volume being less than the volume of said cavity extending below said body face and excluding the volume of said sensor element; characterised by pouring a volume of a flexible, pourable-in-place diaphragm material above said pressure transfer material sufficient to seal said cavity, wherein said diaphragm material and said pressure transfer material are chemically incompatible.

2. The method of Claim 1, characterised in that said diaphragm is formed adjacent to said second surface in the absence of substantial diaphragm material shrinkage.

3. The method of Claim 1, characterised in that the pourable-in-place diaphragm material is a flowable polymeric material.

4. The method of Claim 2, characterised in that the step of pouring the flexible diaphragm material comprises providing a diaphragm poured from a fluorosilicone material which substantially retains its original volume upon setting.

5. The method of Claim 2, characterised in that the step of pouring the flexible diaphragm material comprises providing a diaphragm poured from a dimethyl silicone material which substantially retains its original volume upon setting.

6. The method of Claim 2, characterised in that the step of pouring the flexible diaphragm material comprises providing a diaphragm poured from a medical grade silicone 'rubber' material which substantially retains its original volume upon setting.

7. The method of Claim 1, characterised in that it further includes the step of testing the pressure sensor element before filling the cavity.

8. The method of Claim 7, characterised in that it further includes the steps of adjusting the sensor element and calibrating the pressure element before sealing the cavity.

9. The method of Claim 1, characterised in that the cavity dimensions are selected to provide minimal fill volumes.

10. The method of Claim 1, characterised in that said second generally upward facing surface bottoms peripherally a first recess of given cross-section, and a second recess from said first recess, of smaller cross-section than said first recess, is substantially bottomed by said first interior surface for supporting said pressure sensor element (14), whereby said first recess and said second recess form said cavity (15) into a stepped cavity in said body face; the method further comprising making electrical connections (18) to said pressure sensor element; said pressure transfer material (31) being a non-gaseous pressure transfer medium substantially filling said second recess; said flexible diaphragm material (32) being poured in contact with said pressure transfer medium and with said second surface and chosen so that it does not shrink upon curing thereof.

11. A pressure sensor comprising:
(a) a body (11) having in a first face surface thereof a first recess of given cross-section, bottomed peripherally by means for supporting a diaphragm (32) comprising a first upward facing surface, and a second recess displaced from said first recess, said second recess being of smaller cross-section than said first recess and being substantially bottomed by a second upward facing surface for supporting a pressure sensor element (14), wherein said first recess and said second recess form a unitary stepped cavity (15) in said body face surface;
(b) signal communicating electrical pathways (18, 12) into said cavity;
(c) a pressure sensor element connected to the communicating pathways, the sensor being characterised by:
(d) a non-hardening flexible diaphragm (32) poured in place; and
(e) means for i) isolating said sensor element from the pressure to be measured, ii) for transferring said pressure to said sensor element, and iii) for supporting said diaphragm, comprising a non-hardening pressure transfer medium (31),
wherein the pressure transfer medium and the diaphragm material are both unbonded and chemically incompatible, and said pressure transfer medium and said diaphragm material are capable of transferring said pressure to be measured to said sensor element.

12. The sensor of Claim 11, characterised in that the pressure transfer medium is a dimethyl silicone based material.

13. The sensor of Claim 11, characterised in that the pressure transfer medium is a fluorosilicone material.

14. The sensor of Claim 11, characterised in that the diaphragm material is fluorosilicone based material.

15. The sensor of Claim 11, characterised in that the diaphragm material is dimethyl silicone based material.

16. The sensor of Claim 12, characterised in that it further includes an opaquing agent to isolate the sensor element from light.

17. The sensor of Claim 11, characterised in that it further includes means for transferring a second measurand to the sensing element.

18. The sensor of Claim 11, characterised in that the sensing element comprises a solid state sensor element.

19. The sensor of Claim 11, characterised in that said first recess is of a greater cross-section than said second recess.

20. The sensor of Claim 11, characterised in that said first recess is of a lesser volume that said second recess.

21. The sensor of Claim 11, characterised in that the volume of said first recess substantially includes the diaphragm material.

22. The sensor of Claim 11, characterised in that said first recess includes a partial bottom surface in support of said diaphragm material.

23. The sensor of Claim 11, characterised in that said diaphragm forms a substantially impermeable barrier having an outward facing surface and an inward facing surface facing and supported by said pressure transfer medium and by said first upward facing surface at its periphery.

24. The sensor of Claim 11, characterised in that said outward facing surface is recessed below the body first upward facing surface.

25. The sensor of Claim 17, characterised in that said means for communicating a second measurand to said sensing element includes an aperture in said second upward facing surface and a communicating passageway into said second recess.

26. The sensor of Claim 11, characterised in that said diaphragm material forms a substantially impermeable barrier having an outward facing surface and an inward facing surface facing and supported by said pressure transfer material at its centre and by said upward facing surface at its periphery, the outward facing surface being substantially level with the body first face.

## Patentansprüche

1. Verfahren zur Herstellung eines durch eine Membran umwelt- oder umgebungsgeschützten Drucksensors, umfassend folgende Schritte: Vorsehen eines Körpers (11), der in einer ersten Fläche desselben einen Hohl- oder Innenraum ((15) aufweist, welcher Innenraum eine erste Innenfläche zum Aufnehmen eines Drucksensorelements (14) und eine zweite, im wesentlichen aufwärts weisende Fläche zur Halterung der Membran (32) aufweist; Anbringen des Drucksensorelements (14) an der ersten Fläche; und Ausfüllen zumindest eines Teils des Innenraums um das Drucksensorelement herum mit einem Volumen eines Druckübertragungsmaterials (31), welches Volumen kleiner ist als das Volumen des sich unter die Körperoberfläche erstreckenden Innenraums und das Volumen des Sensorelements ausschließt, dadurch gekennzeichnet, daß ein für das Verschließen des Innenraums ausreichendes Volumen eines flexiblen, direkt (an Ort und Stelle) vergießbaren Membranmaterials über dem Druckübertragungsmaterial gegossen wird, wobei das Membranmaterial und das Druckübertragungsmaterial chemisch inkompatibel sind.

2. Verfahren nach Anspruch 1, dadurch gekennzeichnet, daß die Membran in Abwesenheit einer wesentlichen Membranmaterialschrumpfung nahe oder an der zweiten Fläche geformt wird.

3. Verfahren nach Anspruch 1, dadurch gekennzeichnet, daß das direkt vergießbare Membranmaterial ein fließfähiger polymerer Stoff ist.

4. Verfahren nach Anspruch 2, dadurch gekennzeichnet, daß der Schritt des Vergießens des flexiblen Membranmaterials das Vorsehen oder Ausbilden einer Membran umfaßt, die aus einem Fluorsilikonmaterial, welches nach dem Verfestigen im wesentlichen sein ursprüngliches Volumen beibehält, gegossen wird.

5. Verfahren nach Anspruch 2, dadurch gekennzeichnet, daß der Schritt des Vergießens des flexiblen Membranmaterials das Vorsehen oder Ausbilden einer Membran umfaßt, die aus einem Dimethylsilikonmaterial, das nach dem Verfestigen im wesentlichen sein ursprüngliches Volumen beibehält, gegossen wird.

6. Verfahren nach Anspruch 2, dadurch gekennzeichnet, daß der Schritt des Vergießens des flexiblen Membranmaterials das Vorsehen oder Ausbilden einer Membran umfaßt, die aus einem Silikon-"Gummi"-Material eines medizinischen Gütegrads, das nach dem Verfestigen im Wesentlichen sein ursprüngliches Volumen beibehält, gegossen wird.

7. Verfahren nach Anspruch 1, dadurch gekennzeichnet, daß es den Schritt eines Testens des Drucksensorelements vor dem Ausfüllen des Innenraums beinhaltet.

8. Verfahren nach Anspruch 7, dadurch gekennzeichnet, daß es die Schritte eines Einstellens (Justierens) des Sensorelements und eines Eichens (Abgleichens) des Druck(sensor)elements vor dem Verschließen des Innenraums umfaßt.

9. Verfahren nach Anspruch 1, dadurch gekennzeichnet, daß die Innenraummaße so gewählt werden, daß minimale Füllvolumina gewährleistet sind.

10. Verfahren nach Anspruch 1, dadurch gekennzeichnet, daß die zweite, im wesentlichen aufwärts weisende Fläche umfangsmäßig eine erste Ausnehmung eines gegebenen Querschnitts bodenseitig begrenzt (bottoms) und eine zweite, von der ersten Ausnehmung abgehende Ausnehmung eines kleineren Querschnitts als bei der ersten Ausnehmung bodenseitig im wesentlichen durch die erste Innenfläche zur Halterung des Drucksensor-elements (14) begrenzt ist, so daß die erste und die zweite Ausnehmung den Innenraum (15) als abgestuften Hohl- oder Innenraum in der Körperstirnfläche bilden; wobei das Ver-fahren ferner die Herstellung elektrischer Anschlüsse (18) am Drucksensorelement umfaßt; das Druckübertragungsmaterial (31) ein nichtgasförmiges oder nichtgasendes, die zweite Ausnehmung praktisch ausfüllendes Druckübertragungsmedium ist; und das flexible Membranmaterial (32) in Berührung mit dem Druckübertragungsmedium und mit der zweiten Fläche (ein)gegossen wird und so gewählt ist, daß es beim Aushärten desselben nicht schrumpft.

11. Drucksensor, umfassend:
(a) einen Körper (11) mit einer in einer ersten Stirnfläche desselben vorgesehenen ersten Ausnehmung eines gegebenen Querschnitts, die umfangsmäßig von einem Mittel zur Halterung einer Membran (32), bestehend aus einer ersten aufwärts weisenden Fläche, bodenseitig begrenzt (bottomed) wird, und einer zweiten, gegenüber der ersten Ausnehmung versetzten Ausnehmung, die einen kleineren Querschnitt als die erste Ausnehmung aufweist und im wesentlichen durch eine zweite aufwärts weisende Fläche zur Halterung eines Drucksensorelements (14) bodenseitig begrenzt wird, wobei erste und zweite Ausnehmung in der Körperstirnfläche einen einheitlichen (gemeinamen) Hohl- oder Innenraum (15) bilden,
(b) in den Innenraum führende elektrische Signalübertragungswege (18, 12) und
(c) ein mit den Übertragungswegen verbundenes Drucksensorelement, wobei der Sensor gekennzeichnet ist durch
(d) eine direkt (an Ort und Stelle) gegossene, nichthärtende flexible Membran (32) und
(e) Mittel zum (1) Isolieren des Sensorelements gegenüber dem zu messenden Druck, (2) Übertragen des Drucks auf das Sensorelement und (3) Haltern oder Tragen der Membran, bestehend aus einem nichthärtenden Druckübertragungsmedium (31),
wobei das Druckübertragungsmedium und das Membranmaterial beide ungebunden oder unverklebt und chemisch inkompatibel sind und das Druckübertragungsmedium und das Membranmaterial den zu messenden Druck auf das Sensorelement zu übertragen vermögen.

12. Sensor nach Anspruch 11, dadurch gekennzeichnet, daß das Druckübertragungsmedium ein Material auf Dimethylsilikonbasis ist.

13. Sensor nach Anspruch 11, dadurch gekennzeichnet, daß das Druckübertragungsmedium ein Fluorsilikonmaterial ist.

14. Sensor nach Anspruch 11, dadurch gekennzeichnet, daß das Membranmaterial ein Material auf Fluorsilikonbasis ist.

15. Sensor nach Anspruch 11, dadurch gekennzeichnet, daß das Membranmaterial ein Material auf Dimethylsilikonbasis ist.

16. Sensor nach Anspruch 12, dadurch gekennzeichnet, daß er ferner ein (optisch) undurchlässig machendes Mittel zum Isolieren des Sensorelements gegenüber Licht enthält.

17. Sensor nach Anspruch 11, dadurch gekennzeichnet, daß er ferner ein Mittel zum Übertragen einer zweiten Meßgröße zum Meßelement (Sensorelement) aufweist.

18. Sensor nach Anspruch 11, dadurch gekennzeichnet, daß das Meßelement ein Festkörper-Sensorelement ist.

19. Sensor nach Anspruch 11, dadurch gekennzeichnet, daß die erste Ausnehmung einen größeren Querschnitt als die zweite Ausnehmung aufweist.

20. Sensor nach Anspruch 11, dadurch gekennzeichnet, daß die erste Ausnehmung ein kleineres Volumen als die zweite Ausnehmung aufweist.

21. Sensor nach Anspruch 11, dadurch gekennzeichnet, daß das Volumen der ersten Ausnehmung im wesentlichen das Membranmaterial enthält oder beinhaltet.

22. Sensor nach Anspruch 11, dadurch gekennzeichnet, daß die erste Ausnehmung eine das Membranmaterial abstützende Teilbodenfläche aufweist.

23. Sensor nach Anspruch 11, dadurch gekennzeichnet, daß die Membran eine im wesentlichen undurchlässige Sperre mit einer auswärts weisenden Fläche und einer einwärts weisenden und durch das Druckübertragungsmedium und an ihrem Umfang durch die erste aufwärts weisende Fläche unterstützten Fläche bildet.

24. Sensor nach Anspruch 11, dadurch gekennzeichnet, daß die auswärts weisende Fläche unter die erste aufwärts weisende Fläche des Körpers vertieft angeordnet ist.

25. Sensor nach Anspruch 17, dadurch gekennzeichnet, daß das Mittel zum Übertragen einer zweiten Meßgröße zum Meßelement eine Bohrung in der zweiten aufwärts weisenden Fläche und einen Verbindungsdurchgang in die zweite Ausnehmung umfaßt.

26. Sensor nach Anspruch 11, dadurch gekennzeichnet, daß das Membranmaterial eine im wesentlichen undurchlässige Sperre mit einer auswärts weisenden Fläche und einer einwärts weisenden Fläche, die an ihrem Zentrum dem Druckübertragungsmaterial zugewandt und durch dieses unterstützt und an ihrem Umfang durch die aufwärts weisende Fläche unterstützt ist, bildet, wobei die auswärts weisende Fläche im wesentlichen in einer Ebene mit der ersten Fläche des Körpers liegt.

## Revendications

1. Procédé de fabrication d'un capteur de pression protégé de l'environnement par un diaphragme, comprenant : l'utilisation d'un corps (11) comportant une cavité (15) dans une première face de celui-ci, dans lequel la cavité comporte une première surface intérieure pour recevoir un élément de capteur de pression (14), et une seconde surface tournée généralement vers le haut pour supporter le diaphragme (32) ; le montage de l'élément de capteur de pression (14) sur la première surface ; le remplissage d'une partie au moins de la cavité autour de l'élément de capteur de pression, par un volume d'un matériau de transfert de pression (31), ce volume étant inférieur au volume de la cavité s'étendant au-dessous de la face du corps et excluant le volume de l'élément de capteur ; caractérisé en ce qu'il consiste à couler un volume d'un matériau de diaphragme flexible, coulable sur place, au-dessus du matériau de transfert de pression, en quantité suffisante pour remplir la cavité de manière étanche, dans lequel le matériau de diaphragme et le matériau de transfert de pression sont chimiquement incompatibles.

2. Procédé selon la revendication 1, caractérisé en ce que le diaphragme est formé au voisinage de la seconde surface en l'absence d'un retrait important du matériau de diaphragme.

3. Procédé selon la revendication 1, caractérisé en ce que le matériau de diaphragme coulable sur place est un matériau polymère fluide.

4. Procédé selon la revendication 2, caractérisé en ce que l'étape de coulée du matériau de diaphragme flexible consiste à former un diaphragme coulé dans un matériau de fluorosilicone qui conserve essentiellement son volume initial au moment de la prise.

5. Procédé selon la revendication 2, caractérisé en ce que l'étape de coulée du matériau de diaphragme flexible consiste à former un diaphragme coulé dans un matériau de silicone de diméthyle qui conserve essentiellement son volume initial au moment de la prise.

6. Procédé selon la revendication 2, caractérisé en ce que l'étape de coulée du matériau de diaphragme flexible consiste à former un diaphragme coulé dans un matériau de "caoutchouc" silicone de qualité médicale, qui conserve essentiellement son volume initial au moment de la prise.

7. Procédé selon la revendication 1, caractérisé en ce qu'il comprend en outre l'étape consistant à tester l'élément de capteur de pression avant le remplissage de la cavité.

8. Procédé selon la revendication 7, caractérisé en ce qu'il comprend en outre les étapes de réglage de l'élément de capteur et d'étalonnage de l'élément de pression avant la fermeture étanche de la cavité.

9. Procédé selon la revendication 1, caractérisé en ce que les dimensions de la cavité sont choisies pour donner des volumes de remplissage minimum.

10. Procédé selon la revendication 1, caractérisé en ce que la seconde surface tournée généralement vers le haut forme périphériquement le fond d'un premier creux de section transversale donnée, tandis qu'un second creux partant du premier creux et de plus petite section transversale que ce premier creux, est essentiellement limité dans le fond par la première surface intérieure, pour supporter l'élément de capteur de pression (14), de sorte que le premier creux et le second creux forment la cavité (15) dans une cavité étagée de la face du corps ; le procédé comprenant en outre la réalisation de branchements électriques (18) sur l'élément de capteur de pression ; le matériau de transfert de pression (31) étant un milieu de transfert de pression non-gazeux remplissant essentiellement le second creux ; le matériau de diaphragme flexible (32) étant coulé en contact avec le milieu de transfert de pression et avec la seconde surface, ce matériau étant choisi de manière à ne pas présenter de retrait au moment de sa prise.

11. Capteur de pression comprenant :
(a) un corps (11) comportant, dans une première surface de face de celui-ci, un premier creux de section transversale donnée, limité périphériquement dans le fond par des moyens de support d'un diaphragme (32) comprenant une première surface tournée vers le haut, et un second creux décalé par rapport au premier creux, ce second creux étant de plus petite section transversale que le premier creux et se trouvant limité essentiellement dans le fond par une seconde surface tournée vers le haut pour supporter un élément de capteur de pression (14), de sorte que le premier creux et le second creux forment une cavité étagée d'un seul tenant (15) dans la surface de face du corps ;
(b) des chemins électriques de communication de signaux (18, 12) dans la cavité ;
(c) un élément de capteur de pression branché aux chemins de communication ; le capteur étant caractérisé par :
(d) un diaphragme flexible non-durcissant (32) coulé sur place ; et
(e) des moyens pour i) isoler l'élément de capteur de la pression à mesurer, ii) transférer la pression à l'élément de capteur, et iii) supporter le diaphragme, comprenant un milieu de transfert de pression non-durcissant (31),
de sorte que le milieu de transfert de pression et le matériau de diaphragme sont à la fois non-liés et chimiquement incompatibles, le milieu de transfert de pression et le matériau de diaphragme étant capables de transférer à l'élément de capteur la pression à mesurer.

12. Capteur selon la revendication 11, caractérisé en ce que le milieu de transfert de pression est un matériau à base de silicone de diméthyle.

13. Capteur selon la revendication 11, caractérisé en ce que le milieu de transfert de pression est un matériau de fluorosilicone.

14. Capteur selon la revendication 11, caractérisé en ce que le matériau de diaphragme est un matériau à base de fluorosilicone.

15. Capteur selon la revendication 11, caractérisé en ce que le matériau de diaphragme est un matériau à base de silicone de diméthyle.

16. Capteur selon la revendication 12, caractérisé en ce qu'il comprend en outre un agent opacifiant pour isoler l'élément de capteur de la lumière.

17. Capteur selon la revendication 11, caractérisé en ce qu'il comprend en outre des moyens pour transférer à l'élément de détection une seconde grandeur à mesurer.

18. Capteur selon la revendication 11, caractérisé en ce que l'élément de détection comprend un élément de capteur à l'état solide.

19. Capteur selon la revendication 11, caractérisé en ce que le premier creux présente une section transversale supérieure à celle du second creux.

20. Capteur selon la revendication 11, caractérisé en ce que le premier creux présente un plus petit volume que le second creux.

21. Capteur selon la revendication 11, caractérisé en ce que le volume du premier creux comprend essentiellement le matériau de diaphragme.

22. Capteur selon la revendication 11, caractérisé en ce que le premier creux comprend une surface de fond partielle dans le support du matériau de diaphragme.

23. Capteur selon la revendication 11, caractérisé en ce que le diaphragme forme une barrière essentiellement imperméable comportant une surface tournée vers l'extérieur et une surface tournée vers l'intérieur venant en face et supportée par le milieu de transfert de pression et par la première surface tournée vers le haut à sa périphérie.

24. Capteur selon la revendication 11, caractérisé en ce que la surface tournée vers l'extérieur est creusée au-dessous de la première surface du corps tournée vers le haut.

25. Capteur selon la revendication 17, caractérisé en ce que les moyens destinés à communiquer une seconde grandeur à mesurer à l'élément de capteur, comprennent une ouverture formée dans la seconde surface tournée vers le haut, et un passage de communication dans le second creux.

26. Capteur selon la revendication 11, caractérisé en ce que le matériau de diaphragme forme une barrière essentiellement imperméable comportant une surface tournée vers l'extérieur et une surface tournée vers l'intérieur venant en face et supportée par le matériau de transfert de pression en son centre, et par la surface tournée vers le haut à sa périphérie, la surface tournée vers l'extérieur étant essentiellement au même niveau que la première face du corps.
